# EUROPÄISCHE PATENTSCHRIFT

(11) **EP 3 202 262 B1**
(45) Veröffentlichungstag und Bekanntmachung des Hinweises auf die Patenterteilung: **02.01.2019**
(21) Anmeldenummer: 16154493.7
(22) Anmeldetag: 05.02.2016
(51) Int. Cl.: A01M 7/00, E04C 3/08, E04C 3/11

(54) **LANDWIRTSCHAFTLICHES SPRITZGESTÄNGE MIT EINEM FACHWERK UND EINEM HOLM FÜR DIESES FACHWERK**
AGRICULTURAL SPRAY BOOM WITH A FRAMEWORK AND A BEAM FOR THIS FRAMEWORK
RAMPE DE PULVÉRISATION AGRICOLE COMPRENANT UN CADRE ET UN LONGERON POUR LEDIT CADRE

(43) Veröffentlichungstag der Anmeldung: 09.08.2017
(73) Patentinhaber: voestalpine Krems GmbH, 3500 Krems an der Donau (AT)
(72) Erfinder: SEYR, Alfred, 3125 Statzendorf (AT)
(74) Vertreter: Jell, Friedrich

(56) Entgegenhaltungen:
- EP-A1- 1 230 854
- FR-A1- 2 744 786
- FR-A2- 2 614 560

## Beschreibung

Die Erfindung betrifft ein landwirtschaftliches Spritzgestänge mit einem Fachwerk, ein Fachwerk für dieses Spritzgestänge und einen Holm für dieses Fachwerk mit einem geschlossenen Hohlprofil, der mehrere geneigt zueinander verlaufende Außenschenkel und einen mit Außenschenkeln verbundenen Innenschenkel aufweist, von welchen Außenschenkeln zumindest ein erster Außenschenkel im Querschnitt des Hohlprofils eine Neigung zur Horizontalen aufweist und zum Anschluss von Querstreben des Fachwerks ausgebildet ist.

Aus dem Stand der Technik sind Holme für Fachwerke von landwirtschaftlichen Spritzgestängen bekannt (FR 2 744 786), die ein geschlossenes Hohlprofil mit mehreren zueinander geneigt verlaufenden Außenschenkeln aufweisen. Zudem weisen solche Holme einen mit diesen Außenschenkeln verbundenen Innenschenkel auf. Einer der Außenschenkel verläuft zur Horizontalen geneigt und dient zum Anschluss einer Querstrebe des Fachwerks. Bei weit ausragenden Spritzgestängen können sich ungünstige Kräfteverhältnisse am Holm über die Querstreben aufbauen, was die Standfestigkeit des Holms und damit des Fachwerks gefährdet.

Die Erfindung hat sich die Aufgabe gestellt, einen Holm für ein Fachwerk zu schaffen, welcher standfest hohe Lasten über große Längen abtragen kann und sich dennoch durch konstruktive Einfachheit auszeichnet.

Die Erfindung löst die gestellte Aufgabe dadurch, dass sich die Neigung des ersten Außenschenkels in Längsrichtung des Hohlprofils stetig verändert, und dass der Innenschenkel an den ersten Außenschenkel anschließt.

Verändert sich die Neigung des ersten Außenschenkels in Längsrichtung des Hohlprofils stetig und schließt der Innenschenkel an den ersten Außenschenkel an, so kann ein gegenüber aufzunehmenden Kräften von den Querstreben besonders standfestes Hohlprofil geschaffen werden - und zwar in gesamter Längsrichtung des Hohlprofils, da mit Hilfe der stetigen Änderung der Neigung des Außenschenkels stets ein idealer Anstellwinkel für die Querstreben zur Verfügung gestellt werden kann. Erfindungsgemäß ist somit eine hohe Stabilität und Standfestigkeit des Holms sicherzustellen.

Schließt zudem der Innenschenkel im Querschnitt des Hohlprofils in einem Winkel von 70 bis 110 Grad an den ersten Außenschenkel an, so können die auf den Holm einwirkenden statischen und dynamischen Kräfte besonders zuverlässig abgetragen werden. Es kann sich eine besonders hohe Belastungsfähigkeit des Außenschenkels ergeben, wenn der Innenschenkel normal, also in einem Winkel von 90 Grad, an den Außenschenkel anschließt. Die von den Querstreben in den Außenschenkel einwirkenden Kräfte können demnach direkt in den Innenschenkel weitergeleitet und abgetragen werden - wobei der Innenschenkel die Querstreben zuverlässig abstützt.

Die Standfestigkeit des Holms kann weiter erhöht werden, wenn der Innenschenkel im Querschnitt des Hohlprofils in einer Geraden verläuft. Insbesondere hat sich gezeigt, dass durch den geraden Verlauf des Innenschenkels ein besonders verwindungssteifes Hohlprofil geschaffen werden kann.

Verläuft der Außenquerschnitt des Hohlprofils rechtwinklig trapezförmig, so kann der Außenschenkel des Hohlprofils stets in einem gewünschten Winkel zur einfachen Verbindung weiterer Holme ausgerichtet sein. Die dabei auf das Hohlprofil ausgeübte Krafteinwirkung kann wiederum standfest durch den daran anschließenden Innenschenkel abgetragen werden.

Die Stabilität und somit die zuverlässige Verwendbarkeit des Holms kann erhöht werden, wenn das aus einem einzigen Blech geformte Hohlprofil im Stoß zwischen Innen- und Außenschenkel eine Längsschweißnaht aufweist. Mithilfe einer Längsschweißnaht kann eine standfeste, permanente Verbindung zwischen den Schenkeln zur Verfügung gestellt werden, wodurch die Verwindungssteifigkeit des Holms erhöhbar ist. Zudem kann durch die Schweißnähte auch die Widerstandsfähigkeit gegenüber plastischen Verformungen verbessert werden.

Der erfindungsgemäße Holm ist besonders für ein Fachwerk mit Querstreben geeignet. Hierzu schließt mindestens eine erste Querstrebe an den ersten Außenschenkel des ersten Holms an. Ein solches Fachwerk kann sich besonders durch hohe Stabilität und Steifigkeit auszeichnen. Zudem können die Querstreben des Fachwerks dazu geeignet sein, hohe Lasten in den Holm abzutragen.

Schließt die erste Querstrebe zumindest mit ihren nach außen gerichteten Strebenlängsseiten im Querschnitt des Hohlprofils normal an den ersten Außenschenkel des Holms an, so kann sich ein Fachwerk mit besonders hoher Stabilität ergeben. Insbesondere können die derart normal auf den Außenschenkel des ersten Holms stehenden Querstreben für vorteilhafte Kraftverhältnisse sorgen. So können etwa über die Querstreben auf den ersten Holm einwirkende Kräfte durch den Außenschenkel und den darunter befindlichen Innenschenkel standfest abgetragen und einer Deformation des Holms vorgebeugt werden. Ein in seiner Standfestigkeit besonders hohes Fachwerk ist dadurch geschaffen.

Weist das Fachwerk zwei horizontal und zueinander spitzwinklig geneigt verlaufende Holme auf, wobei mindestens eine erste Querstrebe an die ersten Außenschenkel des jeweiligen Holms anschließt, so kann ein spiegelsymmetrisches Fachwerk geschaffen werden. Dabei sind die beiden Holme derart angeordnet, dass diese einander in einem spitzen Winkel zulaufen. Ein sich zum Ende hin verjüngendes Fachwerk kann dabei geschaffen werden, welches hohen Krafteinwirkungen standhalten kann. Zudem können an jeden Holm spiegelsymmetrisch Querstreben anschließen.

Ein ausgesprochen stabiles und standfestes Fachwerk kann geschaffen werden, wenn das Fachwerk einen dritten Holm aufweist, der zwischen dem ersten und zweiten Holm vertikal versetzt verläuft, wobei alle Holme zueinander spitzwinklig ausgerichtet sind. Insbesondere kann dadurch ein Fachwerk geschaffen werden, welches sich zu einem Ende hin entlang allen drei Dimensionen verjüngt. Die drei Holme können wiederum durch Querstreben verbunden sein, wobei die Querstreben jeweils zwischen einem den jeweiligen Holmen und dem dritten Holm vorgesehen sind. Ein solches Fachwerk kann eine sehr hohe Tragfähigkeit aufweisen, gleichzeitig kann das Gewicht des Fachwerks zum verjüngten Ende hin reduziert werden, wodurch sich das Fachwerk beispielsweise als Ausleger zur Abtragung von Lasten eignet. Die auf einen dritten Holm einwirkenden Kräfte können dabei symmetrisch in die beiden ersten Holme verteilt und abgetragen werden.

Zudem kann sich das erfindungsgemäße Fachwerk besonders dazu eignen, ein landwirtschaftliches Spritzgestänge zu schaffen, welches hohe Lasten zuverlässig tragen kann.

In den Figuren ist beispielsweise der Erfindungsgegenstand anhand einer Ausführungsvariante näher dargestellt. Es zeigen
- Fig. 1: einen Querschnitt eines Holms für ein Fachwerk an einem Holmende,
- Fig. 2: einen Querschnitt des Holms in Fig. 1 an dessen gegenüberliegendem Holmende,
- Fig. 3: ein erfindungsgemäßes Fachwerk mit nach den Figuren 1 und 2 dargestellten Holmen.

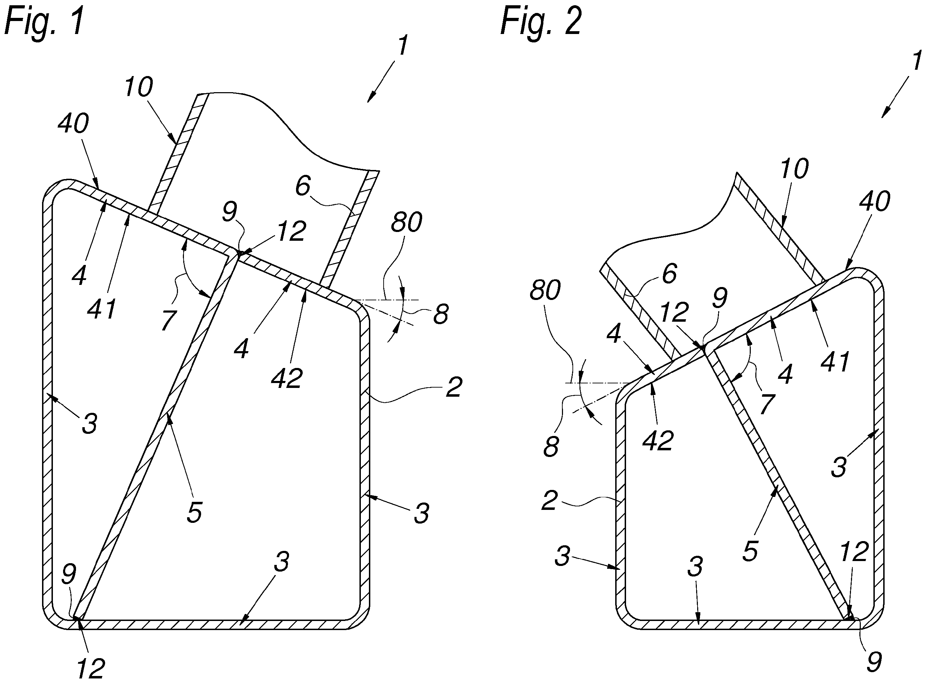

Gemäß Fig. 1 wird beispielsweise der erfindungsgemäße Holm 1 in einem Querschnittsansicht gezeigt. Der Holm 1 weist dabei ein geschlossenes Hohlprofil 2 mit mehreren Außenschenkeln 3, 4 und einem Innenschenkel 5 auf. Die Außenschenkel 3, 4 verlaufen zueinander geneigt. Der Innenschenkel 5 ist mit den Außenschenkeln 3, 4 durch Schweißnähte 9 stoffschlüssig verbunden und verläuft im Inneren des Hohlprofils 2.

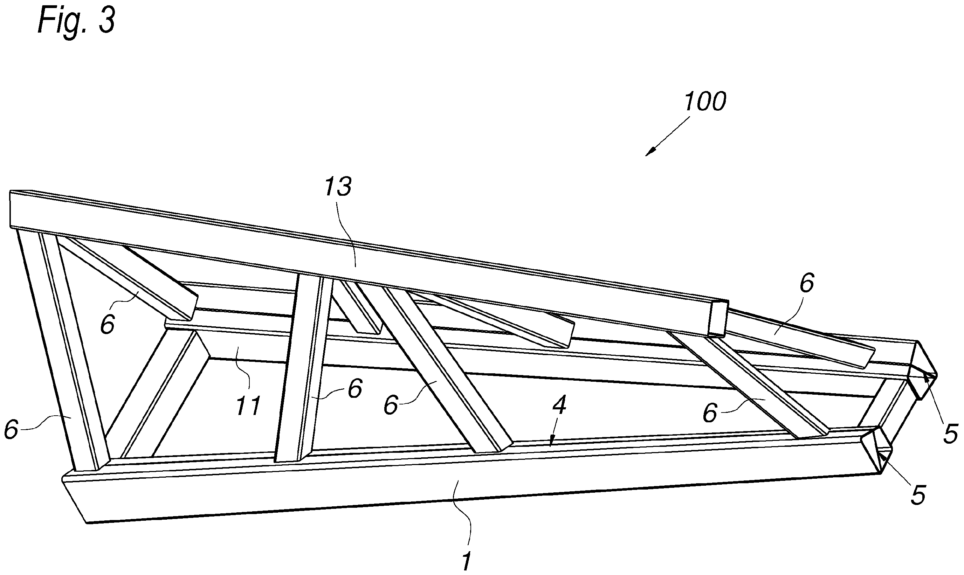

Von diesen Außenschenkeln 3, 4 ist ein erster, im Querschnitt zur Horizontalen 80 geneigter Außenschenkel 4 zum Anschluss von Querstreben 6 eines Fachwerks 100 ausgebildet - welche in der Figur 3 näher dargestellt sind. Hierzu weist der erste Außenschenkel 4 eine Anschlussfläche 40 auf, an der die Querstreben 6 befestigt bzw. angeschweißt werden können.

Erfindungsgemäß ändert sich diese Neigung 8 des ersten Außenschenkels 4 in Längsrichtung des Hohlprofils 2 stetig. Dies ist anhand eines Vergleichs der Figuren 1 und 2 zu erkennen - die jeweils eines der Enden des erfindungsgemäßen Holms im Querschnitt zeigen. Neben der, im Vergleich zur Fig. 1 geringeren Neigung 8 in Fig. 2 kann eine Verjüngung des Hohlprofils 2 zum in Fig. 2 gezeigten Holmenden-Querschnitt erkannt werden.

Im Querschnitt schließt der Innenschenkel 5 im rechten Winkel (90 Grad) 7 an dem ersten Außenschenkel 4 an, wobei es vorstellbar ist, was jedoch nicht näher dargestellt wurde, dass der Winkel im Bereich von 70 bis 110 Grad liegt.

Ein Schenkelteil 41 des ersten Außenschenkels 4 geht in den Innenschenkel 5 über, wobei die beiden Schenkelteile 41, 42 des ersten Außenschenkels 4 in ihrem Stoß zusammengeschweißt sind.

Der Innenschenkel 5 im Inneren des Hohlprofils 2 verläuft auch in einer Geraden vom ersten Außenschenkel 4 zu einem weiteren, gegenüberliegenden Außenschenkel 3 des Hohlprofils und ist an diesen angeschweißt. Durch den geradlinigen Verlauf des Innenschenkels 5 kann die besonders hohe Kraftübertragung erreicht werden.

Die Außenkontur des Hohlprofils 2 im Querschnitt, so wie in den Fig. 1 und 2 gezeigt, bildet eine rechtwinklige Trapezform aus, was unter anderem eine besonders hohe Standfestigkeit und auch einfache bzw. kostengünstige Herstellung des Holms sichert.

Zur Erhöhung der Stabilität des Hohlprofils sind an den jeweiligen Stößen 12 zwischen Innenschenkel 5 und Außenschenkel 4 bzw. Außenschenkel 3 Längsschweißnähte 9 vorgesehen, welche den Innenschenkel 5 zu beiden Seiten hin mit der Außenkontur des Hohlprofils 2 stoffschlüssig verbindet.

In Fig. 3 ist ein Fachwerk 100 gezeigt, in welchem zumindest ein erfindungsgemäßer Holm 1 vorgesehen ist, an den mehrere Querstreben 6 anschließen. Die Querstreben 6 sind dabei mit dem Außenschenkel 4 des Holms 1, 11 stoffschlüssig verbunden. Die Querstreben 6 stehen mit ihren nach außen gerichteten Strebenlängsseiten 10 normal auf den Außenschenkel 4 des Holms 1, 11 - und zwar unabhängig von dessen sich in Längsrichtung des Fachwerks 100 verändernden Neigung 8 im Querschnitt des Holm 1, 11. Dies kann auch anhand der Fig. 1 erkannt werden. Durch diese normale Lage der Querstreben 6 auf den Holm 1 ist die Kraftverteilung im Holm 1 verbesserbar. Insbesondere kann die in normaler Richtung auf den Außenschenkel 4 wirkende Kraft direkt in den Innenschenkel 5 abgeleitet werden, womit eine besonders standfeste Vorrichtung geschaffen ist.

Das Fachwerk 100 mit seinen zwei Holmen 1, 11 ist in horizontaler Richtung des Fachwerks 100 zueinander spitz zulaufend vorgesehen. Zudem ist im Fachwerk 100 ein dritter Holm 13 vorgesehen, an welchem alle Querstreben 6 der beiden Holme 1, 11 befestigt sind. Der dritte Holm 13 ist zwischen den Holmen 1, 11 angeordnet und in vertikaler Richtung nach oben versetzt - er verläuft ebenfalls in spitzem Winkel den Enden der Holme 1, 11.

## Patentansprüche

1. Holm für ein Fachwerk (100) mit einem geschlossenen Hohlprofil (2), der mehrere geneigt zueinander verlaufende Außenschenkel (3, 4) und einen mit Außenschenkeln (3, 4) verbundenen Innenschenkel (5) aufweist, von welchen Außenschenkeln (3, 4) zumindest ein erster Außenschenkel (4) im Querschnitt des Hohlprofils eine Neigung (8) zur Horizontalen (80) aufweist und zum Anschluss von Querstreben (6) des Fachwerks (100) ausgebildet ist, **dadurch gekennzeichnet, dass** sich die Neigung (8) des ersten Außenschenkels (4) in Längsrichtung des Hohlprofils (2) stetig verändert, und dass der Innenschenkel (5) an den ersten Außenschenkel (4) anschließt.

2. Holm nach Anspruch 1, **dadurch gekennzeichnet, dass** der Innenschenkel (5) im Querschnitt des Hohlprofils (2) in einem Winkel (7) von 70 bis 110 Grad, insbesondere 90 Grad, an den ersten Außenschenkel (4) anschließt.

3. Holm nach Anspruch 1 oder 2, **dadurch gekennzeichnet, dass** der Innenschenkel (5) im Querschnitt des Hohlprofils (2) in einer Geraden verläuft.

4. Holm nach einem der Ansprüche 1, 2 oder 3, **dadurch gekennzeichnet, dass** der Außenquerschnitt des Hohlprofils (2) rechtwinklig trapezförmig verläuft.

5. Holm nach einem der Ansprüche 1 bis 4, **dadurch gekennzeichnet, dass** das aus einem einzigen Blech geformte Hohlprofil (2) im Stoß (12) zwischen Innen- (5) und Außenschenkel (3, 4) eine Längsschweißnaht (9) aufweist.

6. Fachwerk mit mindestens einem ersten Holm (1) nach einem der Ansprüche 1 bis 5 und mit mindestens einer ersten Querstrebe (6), die an den ersten Außenschenkel (4) des ersten Holms (1) anschließt.

7. Fachwerk nach Anspruch 6, **dadurch gekennzeichnet, dass** die erste Querstrebe (6) zumindest mit ihrer nach außen gerichteten Strebenlängsseite (10) im Querschnitt des Hohlprofils (2) normal an den ersten Außenschenkel (4) des Holms (1, 11) anschließt.

8. Fachwerk nach Anspruch 6 oder 7, **dadurch gekennzeichnet, dass** das Fachwerk (101) zwei horizontal und zueinander spitzwinklig geneigt verlaufende Holme (1) nach einem der Ansprüche 1 bis 4 aufweist, wobei mindestens eine erste Querstrebe (6) an die ersten Außenschenkel (4) des jeweiligen Holms (1, 11) anschließt.

9. Fachwerk nach Anspruch 8, **dadurch gekennzeichnet, dass** das Fachwerk (100) einen dritten Holm (13) aufweist, der zum ersten und zweiten Holm (1, 11) vertikal versetzt verläuft, wobei alle Holme (1, 11, 13) zueinander spitzwinklig geneigt ausgerichtet sind.

10. Landwirtschaftliches Spritzgestänge mit einem Fachwerk (100) nach einem der Ansprüche 6 bis 9.

## Claims

1. Beam for a framework (100) having a closed hollow profile (2) which has a plurality of outer legs (3, 4) which extend at an angle to one another and an inner leg (5) which is connected to outer legs (3, 4), of which outer legs (3, 4) at least one first outer leg (4) in the cross-section of the hollow profile has an inclination (8) with respect to the horizontal (80) and is formed to be connected to struts (6) of the framework (100), **characterized in that** the inclination (8) of the first outer leg (4) changes continuously in the longitudinal direction of the hollow profile (2), and **in that** the inner leg (5) adjoins the first outer leg (4).

2. Beam according to claim 1, **characterized in that** the inner leg (5) adjoins the first outer leg (4) in the cross-section of the hollow profile (2) at an angle (7) of 70 to 110 degrees, more particularly 90 degrees.

3. Beam according to claim 1 or 2, **characterized in that** the inner leg (5) extends in a straight line in the cross-section of the hollow profile (2).

4. Beam according to claim 1, 2 or 3, **characterized in that** the outer cross-section of the hollow profile (2) extends trapezoidally at right angles.

5. Beam according to one of the claims 1 to 4, **characterized in that** the hollow profile (2) formed from a single sheet metal has a longitudinal weld seam (9) in the joint (12) between the inner (5) and outer legs (3, 4).

6. Framework having at least one first beam (1) according to one of claims 1 to 5 and having at least one first transverse strut (6) which adjoins the first outer leg (4) of the first beam (1).

7. Framework according to claim 6, **characterized in that** the first transverse strut (6) is normally connected to the first outer leg (4) of the beam (1, 11) at least with its outwardly directed strut longitudinal side (10) in the cross-section of the hollow profile (2).

8. Framework according to claim 6 or 7, **characterized in that** the framework (101) has two beams (1) which extend horizontally and at an acute angle to one another in accordance with one of the claims 1 to 4, wherein at least one first cross strut (6) is connected to the first outer legs (4) of the respective beam (1, 11).

9. Framework according to claim 8, **characterized in that** the framework (100) has a third beam (13) which extends vertically offset from the first and second beam (1, 11), with all beams (1, 11, 13) being aligned at an acute angle to one another.

10. Agricultural sprayer boom with one framework (100) according to one of the claims 6 to 9.

## Revendications

1. Poutre pour un treillis (100) comportant un profilé creux fermé (2) qui présente plusieurs pieds extérieurs (3, 4) s'étendant en angle l'un par rapport à l'autre et un pied intérieur (5) relié à des pieds extérieurs (3, 4), dont au moins un premier pied extérieur (4) dans la section du profilé creux présente une pente (8) vers l'horizontale (80) et est conçu pour relier les contrefiches transversales (6) du treillis (100), **caractérisée en ce que** l'inclinaison (8) de la première branche extérieure (4) change continuellement dans la direction longitudinale du profilé creux (2) et **en ce que** la branche intérieure (5) est adjacente à la première branche extérieure (4).

2. Poutre selon la revendication 1, **caractérisée en ce que** la branche intérieure (5) est adjacente à la première branche extérieure (4) dans la section transversale du profilé creux (2) selon un angle (7) de 70 à 110 degrés, en particulier 90 degrés.

3. Poutre selon la revendication 1 ou 2, **caractérisée en ce que** la branche intérieure (5) s'étend en ligne droite dans la section transversale du profilé creux (2).

4. Poutre selon l'une des revendications 1, 2 ou 3, **caractérisée en ce que** la section transversale extérieure du profilé creux (2) est trapézoïdale à angle droit.

5. Poutre selon l'une des revendications 1 à 4, **caractérisée en ce que** le profilé creux (2) formé d'une seule tôle présente une soudure longitudinale (9) dans le joint (12) entre la branche intérieure (5) et la branche extérieure (3, 4).

6. Structure comportant au moins un premier longeron (1) selon l'une des revendications 1 à 5 et au moins une première traverse (6) qui est adjacente à la première branche extérieure (4) du premier longeron (1).

7. Structure selon la revendication 6, **caractérisée en ce que** la première traverse (6) est normalement reliée à la première branche extérieure (4) du longeron (1, 11) au moins avec son côté longitudinal (10) orienté vers l'extérieur dans la section du profilé creux (2).

8. Structure selon la revendication 6 ou 7, **caractérisée en ce que** la structure (101) présente deux longerons (1) s'étendant horizontalement et suivant un angle aigu l'un par rapport à l'autre selon l'une des revendications 1 à 4, au moins une première traverse (6) adjacente aux premières branches extérieures (4) de la poutre (1, 11) respective.

9. Structure selon la revendication 8, **caractérisée en ce que** l'structure (100) présente un troisième longeron (13) qui s'étend verticalement décalé par rapport aux premier et deuxième longerons (1, 11), tous les longerons (1, 11, 13) étant alignés sous un angle aigu les uns avec les autres.

10. Rampe de pulvérisation agricole avec un structure (100) selon l'une des revendication 6 à 9.
